# EUROPEAN PATENT APPLICATION

(11) **EP 1 721 534 A1**
(43) Date of publication of application: **15.11.2006**
(21) Application number: 04716611.1
(22) Date of filing: 03.03.2004
(51) Int. Cl.: A23L 3/3535, A01N 65/00, A01N 41/08

(54) **USE OF EXTRACTS AND COMPOUNDS OF ALLIUM-GENUS PLANTS AS PRESERVATIVES IN THE FOOD AND AGRI-FOOD INDUSTRIES**

(71) Applicant: Mousala, S. L., E-18620 Granada (ES)
(72) Inventor: LARA-CAMBIL, Armando, E-18620 Alhendin Granada (ES); GARCIA PAREJA, Pilar, E-18620 Granada (ES)
(74) Representative: Munoz Garcia, Antonio
(86) International application number: PCT/ES2004/000098
(87) International publication number: WO 2005/089571

(57) **Abstract**

The present invention relates to the use of extracts and compounds of plants from the *Allium* genus for the food and agrifood industry consisting of being used as food preservatives for humans and animals, plants being harvested or post-harvest plants, as well as for environmental disinfection, using thiosulfinates, thiosulfonates, ajoene, vinyl dithiins and products resulting from the decomposition of thiosulfinates.

## Description

### OBJECT OF THE INVENTION

The present specification relates to the use of extracts and compounds of plants from the *Allium* genus as antimicrobial (antibacterial and antifungal) preservatives for the food and agrifood industry the purpose of which is to be configured as a natural alternative to the systematic and abusive use of certain food preservatives, both in animal and in human foods, and also as a response to the extensive and intensive use of non-natural antimicrobial agents in agriculture, particularly in the post-harvest treatments of fruits, vegetables and other agrifood products.

### FIELD OF THE INVENTION

This invention is applicable within the industry dedicated to the manufacture of preservatives and flavoring agents for the food and agrifood industry, particularly natural preservative products.

### BACKGROUND OF THE INVENTION

The odor of the spices belonging to this botanical genus are well known, and the most known ones are garlic (*Allium sativum* L.) and onions *(Allium cepa* L.), although there are other less known interesting ones as well such as leeks (*Allium ampeloprasum* L. Var. *porrum*), shallots (*Allium ascalonicum auct.*), wild garlic or ramson *(Allium ursinum* L.), chives *(Allium schoenoprasum* L.), etc. These plants have been known since ancient times for their strong odor, spicy flavor and striking physiological effects. In 1944 Cavallito and Bailey (1, 2) discovered some of the compounds responsible for these properties, isolated allicin (allyl allylthiosulfinate) from garlic and demonstrated that this compound and some of its homologues are responsible for the antibacterial activity of garlic (1, 3) against strains of microorganisms pathogenic to man, and a patent was published as a result of this investigation (4).

Much more recent investigations have demonstrated that these products, thiosulfinates, decompose and/or are converted into other byproducts, such as thiosulfonates, sulfides, disulfides, sulfoxides, etc., which in turn have a variety of biological effects like the thiosulfinates, such as antithrombotic effects (5, 6), antimicrobial effects (7, 8), antioxidizing effects (9), insecticide effects (10, 11), etc. Nevertheless, the work and investigation regarding the application of these compounds in food as antimicrobial agents within foods is very scarce or almost inexistent, and there is no reference whatsoever to the antimicrobial treatment of foods susceptible to becoming contaminated on their surface by fungi or bacteria, such as cheeses, sausages/cold meats, fresh foods, pre-cooked foods, ready-to-serve foods, etc. There is reference to the use of garlic extracts in combination with other essential oils for use as an insecticide and antifungal in plants (12) and of *Allium tuberosum rottler* for the preservation of foods, and also as a fungicide for plants (13). None of these cases allude to the application of the extract on the surface of foods, whether alone or with food coating agents (edible or not) for the purpose of preserving the surface of the foodstuff free of the action of fungi and bacteria, as is the case of some types of pre-cooked foods, cheeses, etc., or fruits, vegetables and garden produce in post-harvest treatments so that these products reach the consumer in perfect consumption conditions and with a good appearance.

Likewise, references to its use as antimicrobial agents in agricultural treatments (during harvest or post-harvest) are also very scarce (with the previously mentioned exception) or inexistent in some cases. In the case of natural thiosulfinates, or any of their decomposition products, there are few references in the literature for their possible use in agriculture. For example, allicin (1) and ajoene (2) were tested in vitro against several species pathogenic to vegetables (14). There are references to the antimicrobial activity of thiosulfonates obtained from the decomposition of thiosulfinates (15), (16), and this same type of products but only artificial, such as hydroxypropyl methyl thiosulfonate (HPMTS), and said compounds are used for the preservation of paints, varnishes and cooling tower waters (17), and other products with these same properties are in the experimental phase (16). There is another non-natural thiosulfonate, bensultap, 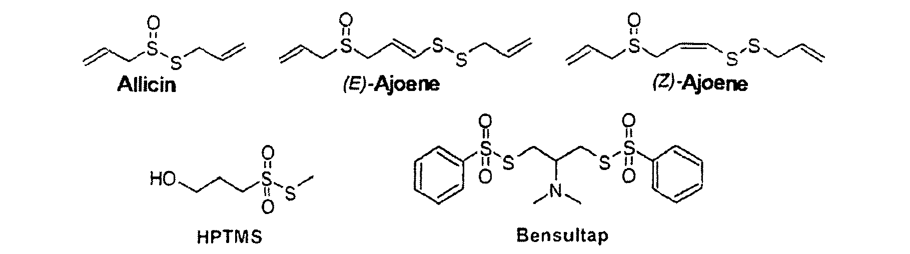 which has commercial use as an insecticide (10). The application of products isolated from plants of the *Allium* genus (such as garlic, onions, chives, leaks, etc.) or from their extracts, such as antimicrobial agents in foods or their use in agriculture (pre- and post-harvest) has not been thoroughly studied until now.

A very important aspect of food preservation is surface contamination by fungi and bacteria. In cured foods, such as cheese and sausages, it is a real problem. European food legislation aims to resolve these problems by means of the use of preservatives (18), (19), such as sorbic acid (E-200) and its salts (potassium salt E-202 and calcium salt E-203), benzoic acid (E-210) and its salts (sodium salt E-211, potassium salt E-212 and calcium salt E-233), parabens (ethyl p-hydroxybenzoate E-214 and its sodium salt E-215, propyl p-hydroxybenzoate E-216 and its sodium salt E-217, methyl p-hydroxybenzoate E-218 and its sodium salt E-219), propionic acid (E-280) and its salts (sodium salt E-281, potassium salt E-282 and calcium salt E-283) and pimaricin (E-235, a polyene macrolide antibiotic). All these organic acids, phenols and their salts have very limited effectiveness, and only pimaricin has considerable antifungal activity in comparison with the previously mentioned products (see Table 2). Undoubtedly the abuse of sorbate (and the remaining organic acids and their salts) and especially antibiotics such as pimaricin, poses serious problems of toxicity (such as allergies for example) and of microorganism resistance to antibiotics.

These products can also be applied in the preservation of animal food preparations. On the other hand, one of the ways of preventing diseases in animals is to administer antibiotics through feedstuffs; said antibiotics can be passed to the human food chain when ingesting products from these animals (milk, meat products, eggs, etc.), increasing the aforementioned problems.

The intensive and extensive treatment with pest control products, most of these being artificial (20), of crops (cereals, fruits and vegetables, etc.) and post-harvest treatments also imply a human and animal health risk, as well as an environmental hazard.

There are no references in the literature regarding the application of these extracts and compounds as disinfectants. Disinfection is an essential aspect in the food and agrifood industry, and it is fundamental due to the increasingly restrictive regulations regarding the use of preservatives in foods, which has forced a maximization of hygiene measures:
- In products to be used as ingredients in foods, which may be a significant source of contamination, for example spices that are added to many fresh or ready-to-serve food products.
- In the environment, as well as in installations and equipment, as all of them are possible sources of contamination where microorganisms may be stationed and cause food contamination.

Considering the possibility of using these products from the *Allium* family in disinfection, the innumerable advantages they provide compared to some of the products conventionally used for this purpose, particularly in the food industry, are evident. Products such as chlorine, quaternary ammoniums, peracetic acid, para-hydroxy-phenyl-salicylamide (osalmide), etc. can be found on the market in different presentations for being applied as liquids, solids or smoke generating products; although these products are effective, they all have obvious drawbacks:
1. They are toxic products which, due to ingestion or even exposure on the skin or eyes, even when diluted and at low doses, may have severe consequences. This further implies that the installations and utensils treated with these products must be rinsed with abundant water after use so that there are no remains of these products which can contaminate foods.
2. In relation to the foregoing, they cannot be applied in the presence of foods, which means that the rooms where they are to be used must be evacuated, with the resulting economic cost.
3. The antimicrobial activity of some of these products is limited.

The compounds of plants from the *Allium* genus have clear advantages:
1. They are natural products with low and/or limited toxicity furthermore having beneficial effects, as previously mentioned, so if there are any remains of these products after washing, there is no risk of them causing any accident due to ingestion.
2. In relation to the foregoing, rooms containing foods can be disinfected without this implying any health risk, which prevents having to remove the foods and therefore implies significant savings in time and money.
3. These compounds are strong antimicrobial agents, particularly thiosulfinates, thiosulfonates and ajoene, and they further have a broad spectrum of action, as will be seen below, so they are excellent disinfectants.

The use of natural products that have also been conventionally consumed in human diet, as they are constituents of plants used in traditional gastronomy, assures their safety as well as having no effect on the environment. Plants from the *Allium* genus have been used in traditional cuisine and in curative remedies for thousands of years for humans and animals, demonstrating their effectiveness, usefulness and safety (21), (22). Therefore these products represent a real and effective alternative, as will now be seen, to the use of traditional food preservatives (as previously mentioned), a response to antibiotics in animal feedstuffs, an effective remedy against many microbial pests affecting crops and post-harvest products, and effective disinfectants that can even be used in the presence of foods.

The applicant is aware of the existence of patents of invention JP8012570, JP62129224, W09207575, KR2002057877, KO1020020048347, US2508745 and EP0945066, all related to inventions in which natural products derived from *Allium* or similar products are used as natural preservatives, and none of them contemplates the features described in this specification.

The applicant is also aware of the existence of patents of invention UK 2061987 and JP62263121 which, like the patents above, have a similar application, this invention being intended for obtaining pharmaceutical compositions based on similar products.

### LITERATURE

[1] Cavallito, C,J. and Bailey J.H.; Allicin, the Antibacterial Principle of Allium sativum. I. "Isolation, Physical Properties and Antibacterial Action". J. Am. Chem. Soc., 66, 1950-1951 (1944).
[2] Cavallito, C.J., Buck, J.S. and Suter, C.M.; "Allicin, the Antibacterial Principle of Allium sativum. II. Determination of the Chemical Structure". J. Am. Chem. Soc., 66, 1952-1954 (1944).
[3] Small, L.D., Bailey, J.H. and Cavallito, C.J.; "Alkyl Thiosulfinates". J. Am. Chem. Soc., 69, 1710-1713 (1944).
[4] Cavallito, C.J. and Small, L.D. "Hydrocarbon Esters of Hydrocarbonylthiolsulfinic Acids and their Process of Preparation". US Patent 2,508,745 (1950).
[5] Apit-Castro, R., Cabrera, S., Cruz, M.R., Ledezma, E. and Jain, M.K.; "Effect of Garlic Extract and Three Pure Components Isolated from it on Human Platelet zAggregation, Arachidonate Metabolism, Release Reaction and Platelet Ultrastructure". Thromb. Res., 32, 155-169, (1983).
[6] Block, E., Ahmand, S., Catalfamo, J.L., Jain, M.K. and Apitz-Castro, R.; "Antithombic Organosulfur Compounds from Garlic: Structural, Mechamistics, and Synthetic Studies". J. Am. Chem. Soc., 108, 7045-7055 (1986).
[7] Yoshida, S., Kasuga, S., Hayashi, N., Ushirogushi, T., Matsuura, H. and Nakagawa, S.; "Antifungal Activity of Ajoene Derived from Garlic". Appl. Environ. Microbiol., 53(3), 615-617, (1987).
[8] Kyung, K.H. and Lee, Y.C.; "Antimicrobial Activities and Sulfur Compounds Derived from Salk(en)yl-L-Cysteine Sulfoxides in Allium and Brassica". Food Rev. Int., 17(2), 183-198, (2001).
[9] Yin, M. and Cheng, W.; "Antioxidant Activity of Several Allium Members". J. Agric. Food Chem., 46, 4097-4101 (1998).
[10] Carlos De Liñan Vicente. "Farmacologia Vegetal" 3a Edicion. Ed. Ediciones Agrotécnicas, S.L. 2003.
[11] Auger, J.; Dugrabot, S.; Naudin, A.; Abo-Ghalia, A.; Pierre, D. and Thibout, E. "Potential of Allium allelochemicals for safe insect control". IOBC wprs Bulletin, 25 (9), 295 (2002).
[12] Hsu, H.J.; Chang, C.; Zhou, J. N.: "Natural Pesticide Containing Garlic". European Patent Aplication: EP 0945066A1 (1999)
[13] Jung, B.M.; Kim, S. Gi; Koo, J.M.; Lee, J. B. and Park, J. M. *"Allium tuberosum rattler* extract against feed putrefying fungus, plant pathogenic fungus and plant putrefying fungus and method of extraction of antimicrobial active component". *Korean Patent Aplication n°* KR1020020027573*.*
[14] Singh, U.P., Prithiviraj, B., Wagner, K.G. and Plank-Schumacher, K.; Effect of Ajoene, a constituent of Garlic (Allium sativum), on Powdery Mildew (Erysiphe pisi) of pea (Pisum sativum). J. Pl. Dis. Prot., 102(2), 399-406 (1995).
[15] Small, L.D.; Bailey, J.H. and Cavallito, C.J. "Comparison of Same Properties of Thiosulfonates and Thiosulfinates". J. Am. Chem. Soc. 71, 3565-3566 (1949).
[16] A)Baerlocher, F.J.; Baerlocher, M.O.; Chaulk, C.L.; Langler, R.F. and MacQuarrie, S.L. "Antifungal Thisulfonates: Potency with some Selectivity". Aust. J. Chem. 53, 399-402 (2000). B)Auth Johnston, T. P.; Rueggeberg, W. H. C.; Block, S. S. "Fungicidal Activity and Structure, Fungicidal Activity of Trichloromethyl Thiosulfonates". J. Agric. Food. Chem., 5, 672 (1957)
[17] CAS n°: 29803-57-4; US EPA PC code: 035604.
[18] Real Decreto 142/2002: "Lista positiva de aditivos distintos de colorantes y edulcorantes para su uso en la elaboración de productos alimenticios".
[19] Directiva 95/2/CE del Parlamento Europeo y del Consejo: "Aditivos alimentarios distintos de los colorantes y edulcorantes"; sus modificaciones en la Directiva 98/72/CE y en la Directiva 2001/5/CE.
[20] Carlos de Liñan, "Vademecum 2003 de Productos Fitosanitarios y Nutricionales". Ed. Ediciones Agrotécnicas, S.L.
[21] Block,E., "The Chemistry of Garlic and Onions". Scientific American, 252, 114-119 (1985)
[22] Block, E., "The Organosulfur Chemistry of the Genus Allium - Implications for the Organic Chemistry of Sulfur" Angew. Chem. Int. Ed. Engl., 31, 1135-1178 (1992).
[23] Garcia Pareja M.P., Garcia Pareja M., Lara Cambil A., Paris Villalta J., Ramos-Cormenzana A. "Investigaciones de antimicrobianos de plantas: compuestos constitutivos e inducidos. XVII Congreso Nacional de Microbiologia". F. Farmacia. Univ. Granada. Septiembre, 1999.
[24] Iberl, B., Winkler, G. and Knoblock, K., "Products of Allicin Transformation: Ajoenes and Dithiins, Characterization and their Determination by HPLC". Planta Medica, 56, 202-211 (1990).
[25] Freeman, F. and Kodera, Y., "Garlic Chemistry: Stability of S-(2-Propenyl) 2-Propene-1-sulfinothiote (Allicin) in Blood, Solvents and Simulated Physiological Fluids". J. Agric. Food. Chem., 43, 2332-2338 (1995).
[26] Block, E., Naganathan, S., Putman, D. and Zhao, S. "Allium Chemistry: HPLC Analisys of Thiosulfiantes from Onion, Garlic, Wild Garlic (Ramsoms), Leek, Scallion, Shallot, Elephant (Great-Headed) Garlic, Chive, and Chinese Chive. Uniquely High Allyl to Methyl Ratios in Some Garlic Samples". J. Agric. Food. Chem., 40, 2418-2430 (1992).
[27] Kubec, R.; Kim, S.; McKeon, D.M. and Musah, R.A. "Isolation of S-n-Butylcystein Sulfoxide and Six n-Butyl-Containing Thiosulfinates from Allium siculum". J. Nat. Prod. , 65, 960-964 (2002).
[28] Fernández, J.Y; Salazar, J.A.; Chaires, L.; Jiménez, J.; Márquez, M. y Ramos, E.G. "Aplicaciones Biotecnológicas de la Microencapsulación". Avance y Perspectiva, 21, 313-319 (2002).
[29] Jozsef Sze-Tli, "Cyclodextrin Complexes, Their Preparation, and Pharmaceutical Compositions Containing Them". UK Patent Application: GB2061987.
[30] W. C. Still, M. Kahn, A. Miltra, "Rapid Chromatographic Technique for Preparative Separation with Moderate Resolution". J. Org. Chem., 43, 2923-2925 (1978).

### DESCRIPTION OF THE INVENTION

The use of extracts and compounds of plants from the *Allium* genus as antimicrobial preservatives for the food and agrifood industry proposed by the invention allows obtaining antimicrobial preservatives for human and animal food, both in the foods and on their surface, the application thereof in agriculture, both in the field and in post-harvest treatments, and also the application thereof as disinfectants.

More specifically, the use of extracts and compounds of plants from the *Allium* genus as preservatives for the food and agrifood industry object of the invention consists of obtaining extracts from the water in which garlic is macerated and in which the antimicrobial activity is verified (23), see Table 1. The hexane extracts (A1 and A2) and extracts with n-butanol (B1 and B2) were very interesting when compared with the strongest commercial products applied in food (such as pimaricin, see Table 2) and agriculture (prochloraz, thiabendazole, guazatine, etc., see Table 3). It can be observed that the broad spectrum of antimicrobial, bactericidal and fungicidal action of these extracts (and of the products mentioned below in this invention) make them interesting for their application:
1. In foods, where the only alternatives are propionic acid and its derivatives, parahydroxybenzoic acid esters and its salts, sorbic acid and its salts, etc., none of which has the antibacterial and antifungal activity demonstrated by these extracts. Clear markets of application are pre-cooked, "ready-to-serve" foods representing an increasingly large market share, the dairy sector, and they are also ideal for the more traditional sectors of sauces, charcuterie and in several meat preparations (fresh or cooked).
2. On the surface of foods they are an effective alternative to the use of pimaricin for preventing surface contamination of cured foods both by fungi and bacteria. Bacterial contamination is frequent in fresh cheeses, and pimaricin is completely ineffective against this problem (see Table 1), as are the other previously mentioned authorized preservatives.
3. In pre-harvest (field) and post-harvest treatments, as can be seen in Table 3, they are an alternative to the use of the usual plant protection agents, such as azoles, thiabendazoles, etc. (known commercial names are for example: thiabendazole, prochloraz, imazalil) (20). This field of application is particularly important due to the complete absence of natural commercial products combining at the same time potency and a broad spectrum antifungal agent, as is the case of these garlic extracts and the products object of this invention (compare Tables 1 and 3).
4. In combination with coatings used for foods (edible or not), they can be highly useful because in addition to preserving the surface of the food, this coating: a) modulates preservative release, b) homogenously distributes the preservative on the surface of the food as it can be very uneven, c) stabilizes these products and makes them more effective over time.
5. The broad and potent antimicrobial spectrum of these compounds and extracts allows thinking, as will be demonstrated below, that they are potent disinfecting agents that can be applied even in the presence of foods, something which is impossible with usual disinfectants (quaternary chloride, ammonium, etc.).
6. As flavorings, as the flavoring properties of these compounds are a bonus, and they allow partially or completely substituting garlic, onion, etc., or the extracts and essences thereof, which are hardly effective as antimicrobial agents, from the formulations of preparations for the food industry, allowing combining the characteristic flavor of the plants of this botanical genus with their antimicrobial effectiveness.

**Table 1**

| **TESTED MICROORGANISMS** | **TESTED GARLIC EXTRACT SAMPLES (1000 ppm)** | | | |
|---|---|---|---|---|
| | **A1** | **A2** | **B1** | **B2** |
| *Escherichia coli,* CECT 515 | 9 | 9 | 14 | 18 |
| *Bacillus cereus,* CECT 1178 | 23 | 24 | 24 | 28 |
| *Penicillium sp,* isolated from cheese | 26 | 26 | 37 | 48 |
| *Aspergillus terreus,* isolated from the environment | 10 | 10 | 35 | 44 |

| | | | | |
|---|---|---|---|---|
| Data expressed in mm of the inhibition halo diameter. | | | | |

**Table 2**

| **TESTED MICROORGANISMS** | **PIMARICIN (dosage in ppm)** | | | | | |
|---|---|---|---|---|---|---|
| | **1000** | **500** | **250** | **250** | **100** | **62.5** |
| *Micrococcus luteus,* isolated from a spiced sausage | 0 | -- | -- | -- | 0 | -- |
| *Staphylococcus aureus,* isolated from hamburgers | 0 | 0 | 0 | 0 | -- | 0 |
| *Streptococcus faecalis,* isolated from a spiced sausage | 0 | 0 | 0 | 0 | -- | 0 |
| *Bacillus megaterium,* ATCC 33085 | 0 | 0 | 0 | 0 | -- | 0 |
| *Bacillus cereus,* CECT 1178 | 0 | -- | -- | -- | 0 | -- |
| *Pseudomonas aeruginosa,* ATCC 13925 | 0 | 0 | 0 | 0 | -- | 0 |
| *Escherichia coli,* CECT 515 | 0 | 0 | 0 | 0 | -- | 0 |
| *Salmonella typhimurium,* ATCC 13311 | 0 | 0 | 0 | 0 | -- | 0 |
| *Proteus vulgaris,* ATCC 13315 | 0 | 0 | 0 | 0 | -- | 0 |
| *Candida albicans,* ATCC 10231 | 16 | 14 | 12 | 12 | -- | 10 |
| *Saccharomyces cerevisiae,* CECT 1324 | 26 | -- | -- | -- | 26 | -- |
| *Pullularia pullulans,* CECT 2657 | 23 | 30 | 28 | 28 | -- | 24 |
| *Penicillium funiculosum,* CECT 2702 | 12 | 12 | 11 | 10 | -- | 10 |
| *Penicillium sp,* isolated from cheese | 26 | -- | -- | -- | 24 | -- |
| *Aspergillus niger,* CECT 2700 | 20 | 20 | 19 | 19 | -- | 19 |
| *Aspergillus terreus,* isolated from the environment of the cheese maturation chamber | 15 | -- | -- | -- | 14 | -- |
| *Trichoderma viride,* CECT 2460 | 18 | 16 | 15 | 14 | -- | 13 |

| | | | | | | |
|---|---|---|---|---|---|---|
| Data expressed in mm of the inhibition halo diameter. -- Untested dose | | | | | | |

**Table 3**

| **% active ingredient in commercial product Dosage in ppm of commercial product** | **40% Prochloraz** | | | | **45% Thiabendazole** | | | | **20% Guazatine** | | | **50% Imazalil** | | | |
|---|---|---|---|---|---|---|---|---|---|---|---|---|---|---|---|
| | **4000** | **2000** | | **1000** | **4000** | **2000** | | **1000** | **4000** | **2000** | **1000** | **4000** | **2000** | | **1000** |
| **MICROORGANISMS TESTED** | | | | | | | | | | | | | | | |
| *Penicillium italicum* CECT 2294 | 35 | 35 | | 31 | >40 | >40 | | >40 | 15 | 12 | 10 | 50 | 47 | | 46 |
| *Geotrichum candidum* CECT 1902 | 0 | 0 | | 0 | 0 | 0 | | 0 | 35 | 30 | 27 | 26 | 23 | | 20 |
| *Trichoderma aureoviride* CECT 20102 | 12 | 11 | | 8 | 26 | 26 | | 24 | 35 | 30 | 25 | 31 | 25 | | 20 |
| **Active ingredient, dose in ppm** | **o-Phenyl** | | **phenol** | | **Biphenyl** | | | | **30% Na *o*-phenylphenate** | | | | | **1000** | |
| | **6000** | | **4000** | | **6000** | | **4000** | | **6000** | | **4000** | **2000** | | | |
| **MICROORGANISMS TESTED** | | | | | | | | | | | | | | | |
| *Penicillium italicum* CECT 2294 | 45 | | 45 | | 8 | | 7 | | 53 | | 33 | 30 | | 20 | |
| *Geotrichum candidum* CECT 1902 | 47 | | 45 | | 0 | | 0 | | 40 | | 35 | 30 | | 7 | |
| *Trichoderma aureoviride* CECT 20102 | 42 | | 40 | | 0 | | 0 | | 35 | | 20 | 10 | | 0 | |
| *Rhizopus stolonifer* CECT 2344 | 15 | | 14 | | 0 | | 0 | | 0 | | 0 | 0 | | 0 | |

| | | | | | | | | | | | | | | | |
|---|---|---|---|---|---|---|---|---|---|---|---|---|---|---|---|
| Data expressed in mm of the inhibition halo diameter. | | | | | | | | | | | | | | | |

The aim was then to obtain the active compounds from the extracts, or to synthesize the compounds with possible biological activity described in the literature found in extracts of plants from the *Allium* genus. Once these products were obtained, their antimicrobial activity was verified, and the possible doses for use were determined either for their application in foods or on the surface thereof.

The first tests were with allicin and its degradation products, ajoene and the vinyl dithiins: 3-vinyl-4*H-*1,2-dithiin and 2-vinyl-4*H*-1,3-dithiin. These were prepared according to the processes described hereinafter. First allicin was synthesized and its antimicrobial potential was analyzed against several types of microorganisms (some isolated from foods and others collection strains, see Table 4) was analyzed.

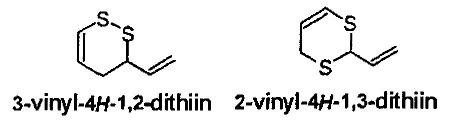

**Table 4**

| **Microorganisms tested** | **Allicin** | | |
|---|---|---|---|
| | **100 ppm** | **50 ppm** | **25 ppm** |
| *Micrococcus luteus,* isolated from a spiced sausage | 32 | 25 | 19 |
| *Bacillus megaterium,* ATCC 33085 | 34 | 27 | 23 |
| *Bacillus cereus,* CECT 1178 | 35 | 29 | 22 |
| *Listeria monocytogenes,* ATCC 15313 | 30 | 24 | 18 |
| *Escherichia coli,* CECT 515 | 21 | 17 | 14 |
| *Candida magnoliae,* isolated from cheese | 38 | 30 | 22 |
| *Candida krusei,* isolated from cheese | 29 | 18 | 14 |
| *Candida parapsilosis,* isolated from cheese | 17 | 14 | -- |
| *Saccharomyces cerevisiae,* CECT 1324 | 44 | 32 | 28 |
| *Penicillium sp,* isolated from cheese | 34 | 26 | 22 |
| *Aspergillus terreus,* isolated from the environment of the cheese maturation chamber | 25 | 22 | 12 |
| *Aspergillus niger,* CECT 2700 | 19 | 13 | 10 |

| | | | |
|---|---|---|---|
| Data expressed in mm of the inhibition halo diameter. -- Untested dose | | | |

A mimetic reaction of natural decomposition of allicin is its decomposition or transformation by means of pyrolysis thereof. The extraction of the pyrolysis product (C), first with hexane and then with ether, gave two extracts: a hexane extract (D) rich in the aforementioned vinyl dithiins, allyl di- and trisulfides, and other allyl polysulfides, and an ajoene-enriched ether extract (E). The activity of all these fractions was tested against a wide range of microbial strains, some coming from collection cultures and others isolated from food, as can be seen in Table 5. All of them have extraordinary activity, so the main active ingredients, ajoene and vinyl dithiins, were isolated and the biological activity of each one of these was tested against microorganisms isolated from foods and others that are typical of post-harvest contamination of fruits, Table 6.

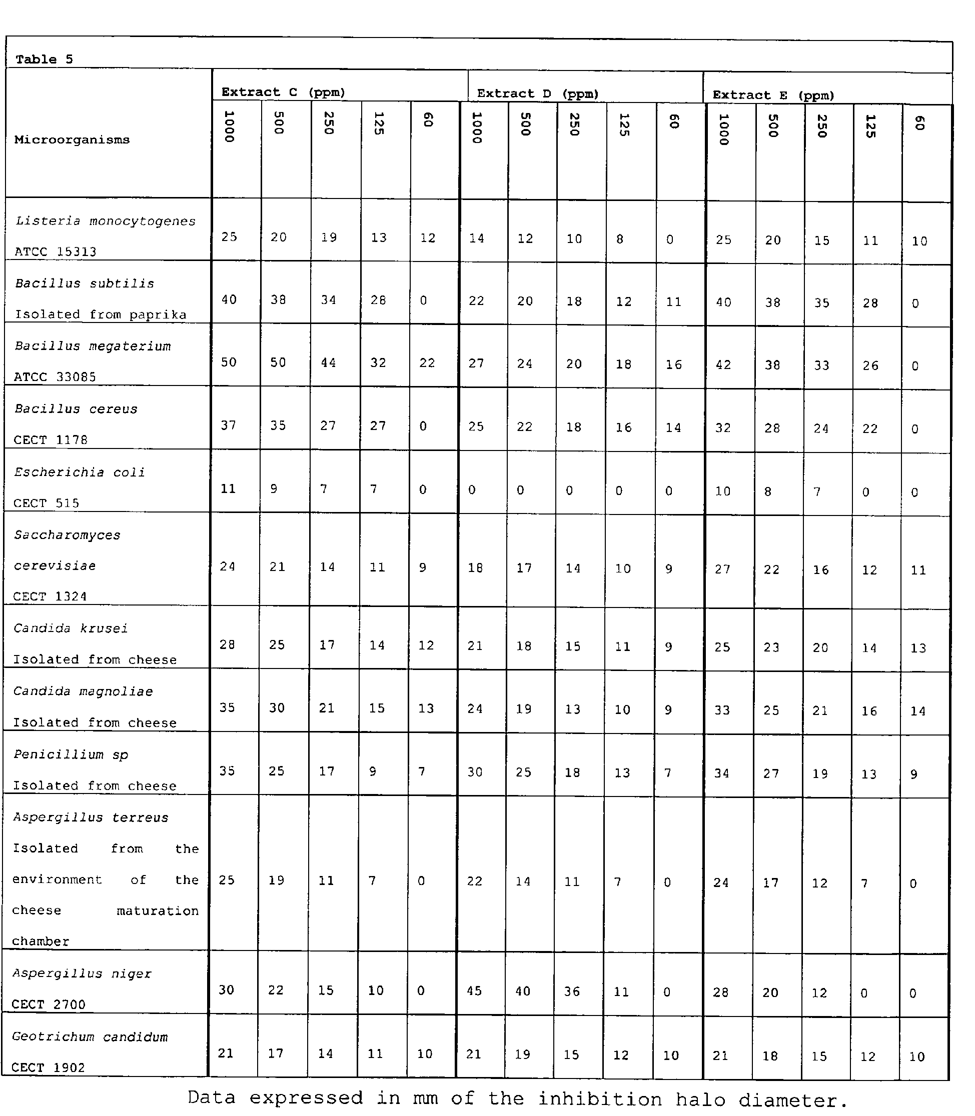

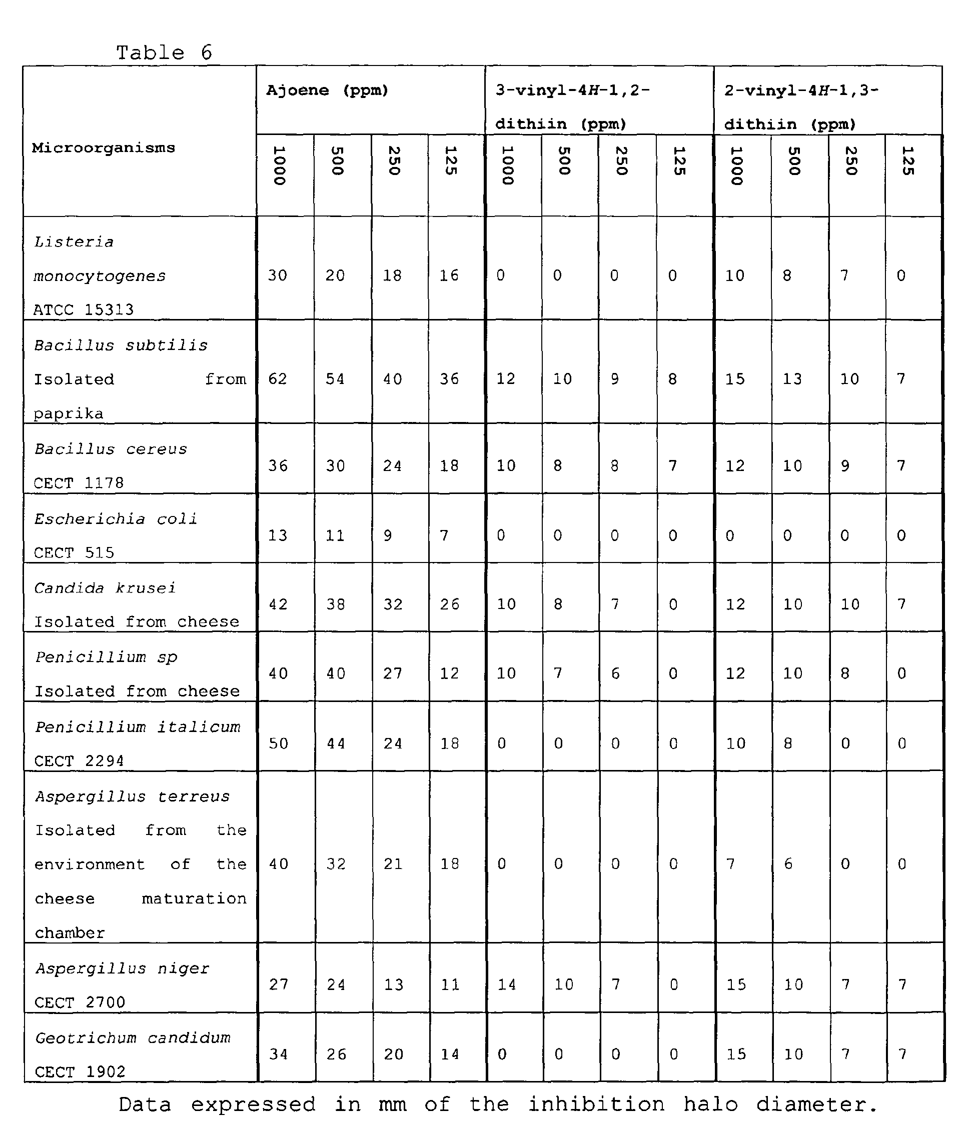

With the antimicrobial activity data, and having determined *in vitro* the active use doses, the stability of the pure products, some of which were known to be unstable such as is the case with thiosulfinates, was then tested in different commercial preparations which could be used as a carrier for these products for their application on the surface of or in foods. Thiosulfinates are the most unstable garlic products, in turn producing other byproducts when decomposing (3, 24, 25) such as ajoenes, thiosulfonates, sulfoxides, sulfides and polysulfides. Of the natural thiosulfonates, propyl propylthiosulfonate (PTS) has been used, for which no explicit references are found in the literature regarding its stability in different mediums, nor of its antimicrobial activity against food and plant contaminating fungi and bacteria. Onions, chives, leeks, shallots, etc. (26) are rich in propyl propylthiosulfonate (PTS), and this is one of the least studied thiosulfinates. It has a similar antimicrobial activity to allicin (see Table 4 and Table 7), which is the most antimicrobial of the thiosulfinates (3).

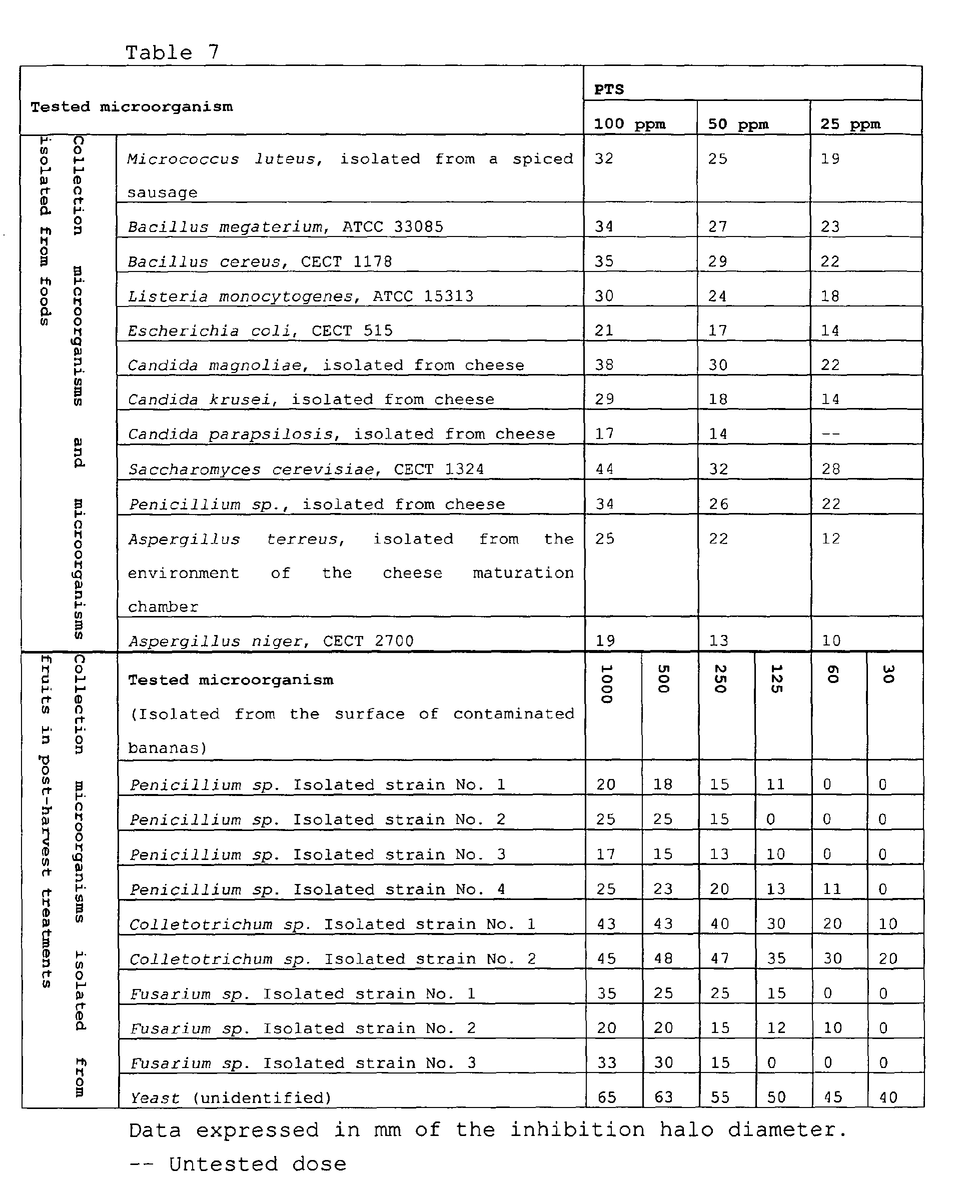

Its stability has been tested in different carriers, some used as coatings (in foods and for post-harvest treatments) as can be seen in Table 8, in which some of the possible carriers have been stated as an example, comprising polysaccharide dispersions and/or food gums (xanthan gum, gum arabic, starches, etc.), plastic polyvinyl acetate and acrylic emulsions, glyceride and sucrose ester dispersions and/or emulsions, all of these with the usual preservatives used in foods such as pimaricin, sorbates, parabens, propionates, citric acid, acetic acid, etc. Stability was monitored for a period of time between 2 and 3 months.

| **Table 8** | | |
|---|---|---|
| **Medium/Carrier** | **ppm of PTS*** | **% PTS**** |
| PVA emulsion | 5000 | 67 |
| | 7500 | 71 |
| | 10400 | 67 |
| Acrylic emulsion (Mowilith® 7281) | 5200 | 87 |
| | 7500 | 84 |
| | 10300 | 77 |
| 25% Sucrose ester dispersion | 5400 | 80 |
| | 7200 | 86 |
| | 10900 | 86 |
| 50% Acetylated glyceride emulsion | 5100 | 72 |
| | 8000 | 91 |
| | 10300 | 81 |
| 30% Acetylated glyceride emulsion | 5200 | 90 |
| | 7900 | 91 |
| | 10800 | 93 |
| Food gum dispersion | 5000 | 88 |
| | 7800 | 91 |
| | 10200 | 90 |
| * Initial PTS | | |
| ** % of PTS found, with respect to the initial PTS, after between two to three months at room temperature | | |

It has further been found that their effectiveness is hardly affected by the presence of the carrier, such as can be seen in Table 9, in which it is demonstrated that the effectiveness in an polyvinyl acetate emulsion is not altered and turns out to be very competitive in comparison to the different preservatives usually used for these food coatings.

**Table 9**

| | **Polyvinyl acetate emulsions** | | |
|---|---|---|---|
| **TESTED MICROORGANISM** | **PTS 5000 ppm** | **PTS 10000 ppm** | **Pimaricin 2000 ppm** |
| *Penicillium sp,* isolated from cheese | 25 | 29 | 18 |
| *Aspergillus niger,* CECT 2700 | 33 | 43 | 20 |
| *Geotrichum candidum* CECT 1902 | 18 | 20 | 15 |
| *Mucor plumbeus,* isolated from cheese | 12 | 13 | 13 |

| | | | |
|---|---|---|---|
| Data expressed in mm of the inhibition halo diameter. | | | |

Some other derivatives which maintain extraordinary activity may also be included as examples, such as: n-butyl n-butyl thiosulfinate (BTS) (27) and propyl propylthiosulfinate (PTSO), the latter representing a series of active ingredients with the thiosulfonate organic function, coming from the decomposition or transformation of thiosulfinates, and which maintains an interesting biological activity, as can be observed in Table 10, very similar to PTS (compare with Table 7).

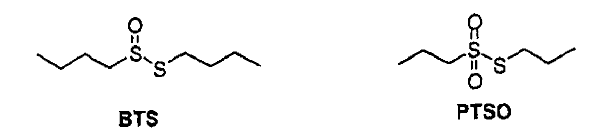

**Table 10**

| **Tested microorganism** | **BTS 1000 ppm** | **PTSO 1000 ppm** |
|---|---|---|
| *Bacillus subtilis,* isolated from paprika | 60 | 65 |
| *Staphylococcus aureus,* isolated from hamburgers | 45 | 55 |
| *Salmonella typhimurium,* ATCC 13311 | 20 | 31 |
| *Penicillium italicum,* CECT 2294 | 67 | 65 |
| *Mucor plumbeus,* isolated from cheese | 17 | 13 |

| | | |
|---|---|---|
| Data expressed in mm of the inhibition halo diameter. | | |

An application dose range can be suggested for these products based on the foregoing, taking into account that due to the potent antimicrobial activity they show, they could not only be present in palliative doses against a specific microbiological problem, but their presence could also be reduced to doses that could be considered preventive. It should be remembered, as stated above, that the antimicrobial effectiveness and the flavoring properties of these compounds may be complementary. The following doses of extract and/or active ingredient are suggested:
- For in a food product, a minimum dose of 1 to 5 ppm, and a maximum dose of 5% (w/w).
- For surface treatments in the product to which it is to be applied, dispersed in any medium, or included in a coating: minimum of 10 ppm and maximum of 10% (w/w).
- Agricultural treatments, doses in the product to be applied in the field or post-harvest: minimum of 10 ppm and maximum of 50% (w/w).
- Disinfecting treatments, doses in the final product to be applied: minimum of 10 ppm and maximum of 50% (w/w).

An important effect is achieved if, as well as carrying these products in a coating, they are encapsulated using several methods (28) such as in oils, food gums, etc., and are added to the coating, finally forming a part of it. The use of the encapsulation for the inside the foods is very useful as well, the same as in disinfection and pre- and post-harvest treatments. With encapsulation the following is achieved:
1. Stabilizing the labile products even further, these being now stabilized: a) when forming links (for example, hydrogen bonds) with the encapsulating carrier, thus preventing intramolecular reactions, and b) also immobilizing the molecule even if the carrier is temporarily in a liquid state, for example, melted or in emulsions, solutions and dispersions, preventing in this case intramolecular reactions. Achieving greater stability allows us to increase the possibilities of application fields and conditions (temperatures, pH, etc.).
2. Modulating the presence of active ingredient in the food, coating, as a disinfecting agent and in pre- and post-harvest treatments, according to the demand for the antimicrobial agent, the latter remaining in reserve until the demand releases it due to a biological contamination. This extends its effectiveness a lot further in time and therefore makes the antimicrobial activity of the coating more effective.

As an example of an encapsulating agent the complexes formed with the natural α, β and γ cyclodextrins have been used. These have already been described as stabilizers and modulators of the antimicrobial activity of allicin (29); the novelty in this case is to incorporate these antimicrobial agents in encapsulated form to the food coating and that they remain forming a part thereof, on the food. As an example, in this case, PTS (propyl propylthiosulfonate) has been used to form the encapsulation complexes with the aforementioned natural cyclodextrins and the antimicrobial activity of each complex has been so verified and compared against PTS (see Table 11). As can be observed, and according to that found in the literature for allicin (29), the antimicrobial activity of the product is not altered, as none of the cyclodextrin complexes are formed. The slight variations are justified due to the greater or lesser release of the active compound (PTS) for each type of complex.

Encapsulation effectiveness, and more specifically forming complexes with cyclodextrins, can be observed in application example number 1.

**Table 11**

| **STRAINS TESTED** | **α-CD complex*** | | **β-CD complex** | | **γ-CD complex** | | **PTS** | |
|---|---|---|---|---|---|---|---|---|
| | **250#** | **125 #** | **250 #** | **125 #** | **250 #** | **125 #** | **250 #** | **125 #** |
| *Staphylococcus aureus* Isolated from hamburgers | 19 | 9 | 22 | 11 | 22 | 11 | 23 | 13 |
| *Bacillus subtilis* Isolated from paprika | 28 | 23 | 32 | 27 | 33 | 28 | 35 | 27 |
| *Escherichia coli* CECT 515 | 17 | 12 | 19 | 15 | 18 | 15 | 18 | 15 |
| *Candida krusei* Isolated from cheese | 33 | 27 | 37 | 32 | 36 | 33 | 38 | 33 |
| *Penicillium sp* Isolated from cheese | 40 | 33 | 43 | 34 | 44 | 36 | 42 | 37 |
| *Aspergillus niger* CECT 2700 | 33 | 18 | 35 | 22 | 36 | 20 | 37 | 21 |
| *Geotrichum candidum* CECT 1902 | 40 | 33 | 40 | 35 | 42 | 37 | 41 | 35 |

| | | | | | | | | |
|---|---|---|---|---|---|---|---|---|
| Data expressed in mm of the inhibition halo diameter. * α-CD, β-CD and γ-CD refer to 10% (w/w) PTS complexes with α, β and γ-cyclodextrin, respectively. # Are the ppm concentrations, which in the case of complexes with cyclodextrin refer to the effective amounts of PTS. | | | | | | | | |

### "In vivo" effectiveness in biological control of fungi in post-harvest treatment of cherries of the "pico colorado" variety.

### A) PTS (propyl propylthiosulfonate) tests

Tests were performed with two PTS concentrations, 500 and 1000 ppm, for controlling pathogenic fungi *Penicillium expansum* and *Monilia fructigena.*

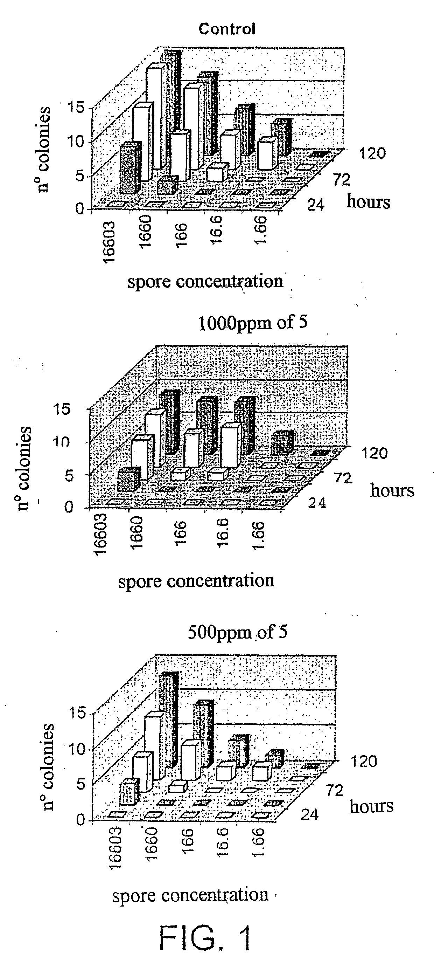

In the case of *Penicillium expansum,* PTS treatments at 500 and 1000 ppm were effective for controlling the development of infections produced by this fungus (Figure 1). Thus, from 48 hours until 120 hours, fruits treated with PTS at 500 ppm were from 26% to 14% less than the control in fruits inoculated with 16603 spores/µL, from 13% to 20% less in fruits inoculated with 1660 spores/µL. Likewise, development of the infections from 72 hours until 120 hours was between 13% and 20% less in fruits treated with PTS at 500 ppm with respect to the control at an inoculation level of 166.03 spores/µL, and between 13 and 20% less at an inoculum level of 16.6 spores/µL. The diameters of the infections produced by development of the fungus in fruits inoculated at concentrations of 1660 and 166 spores/µL and treated with PTS at 500 and 1000 ppm showed a smaller diameter than the control, slowing down the development thereof.

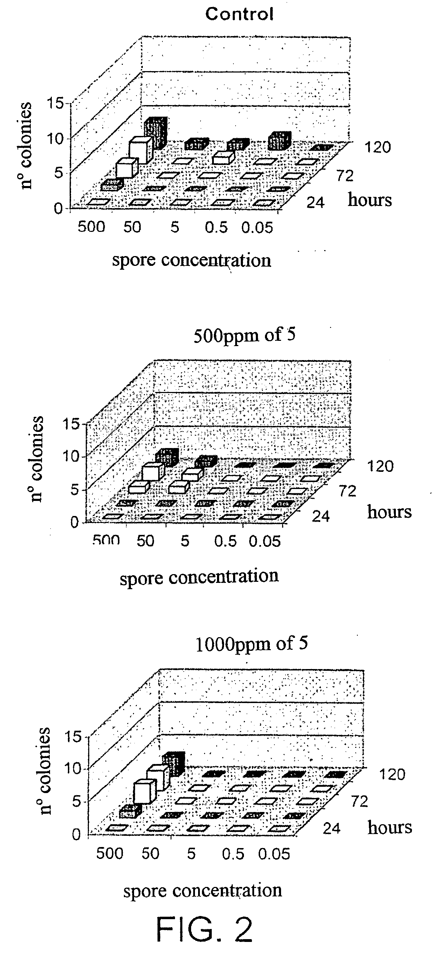

Tests performed with PTS against *Monilia fructigena* were performed at doses of 500 and 1000 ppm, both treatments turned out to be very effective for controlling the development of infections produced by this fungus, completely inhibiting development of the fungus in PTS treatments at 500 ppm in fruits inoculated with 5 spores/µL and in treatments with 1000 ppm in fruits inoculated with 50 spores/µL (Figure 2).

### B) Compatibility tests for PTS (propyl propylthiosulfonate) with a post-harvest coating:

"FOODCOAT DMC" (a product with fatty acid derivatives as a fruit and vegetables coating agent).

Tests were performed at two PTS concentrations, 500 and 1000 ppm, combined with FOODCOAT DMC at a concentration of 11 g/L, against the development of pathogenic fungi *Penicillium expansum* and *Monilia fructigena.*

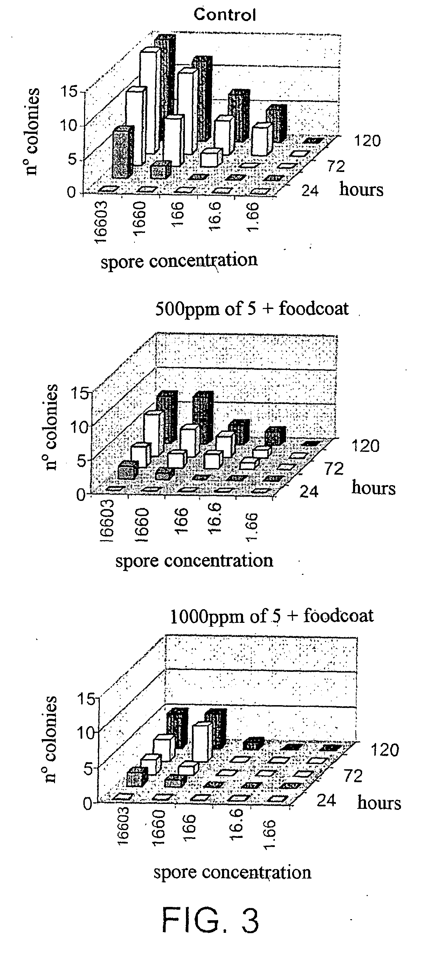

PTS tests at said doses, combined with FOODCOAT DMC, against *Penicillium expansum* were effective in controlling infections produced by this fungus, increasing its effectiveness when increasing PTS concentration (Figure 3). Specifically, PTS tests at 500 ppm with FOODCOAT DMC reduced *Penicillium* development from 48 hours until 120 hours between 33% and 54% with respect to the control when the fruits were inoculated at a concentration of 16603 spores/µL, and they decreased 7% to 34% with respect to the control when the fruits were inoculated at concentrations of 1660 spores/µL. Likewise, treatments with PTS at 500 ppm and FOODCOAT DMC reduced, from 72 hours to 120 hours, *Penicillium* development by 26% when the fruits are inoculated at concentrations of 166 spores/µL and they reduce development of the fungus by 20% when the inoculum concentration was 16 spores/µL. On the other hand the diameters of the infections produced by development of the fungus, when the fruits are inoculated at concentrations of 16603 and 1660 spores/µL, are less than the control in treated cherries.

Combined treatments of PTS at 1000 ppm and FOODCOAT DMC reduce, from 48 hours until 120 hours, *Penicillium* development with respect to the control, between 33% and 67% in fruits inoculated with 16603 spores/µL, and between 7% and 47% in fruits inoculated at concentrations of 1660 spores/µL. Likewise, between 72 and 120 hours, development decreases between 13% and 40% when the fruits are inoculated at concentrations of 166 spores/µL, and they decrease development of the fungus by 26% when inoculum concentration was 16 spores/µL. The diameters of the infections produced by development of the fungus, when the fruits are inoculated at concentrations of 166 spores/µL, are less than the control in treated cherries.

Despite the scarce development of the disease, tests against *Monilia fructigena* are indicative of the effectiveness of the combined treatment with PTS and

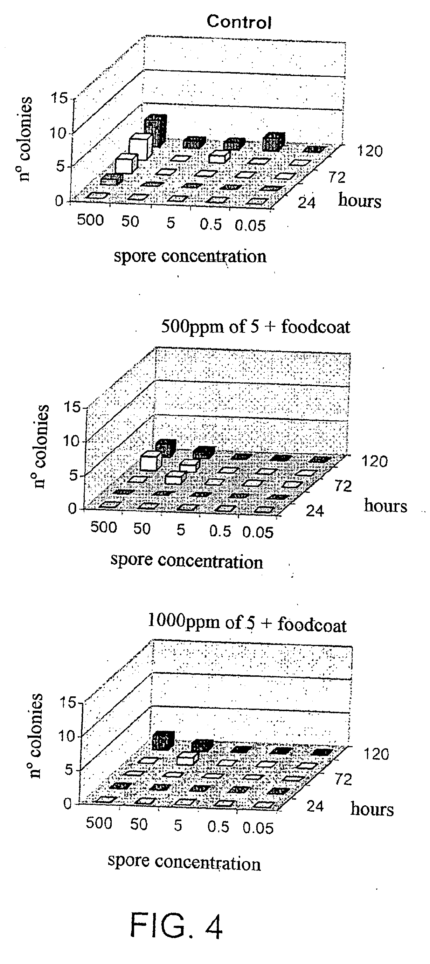

FOODCOAT DMC in control of the development of infections by *Monilia.* Figure 4 shows the complete inhibition of disease development for both treatments at inoculation concentrations of 5 spores/µL. Analyzing the diameters of the infections produced during development of the fungus it is found that in fruits inoculated with 500 spores/µL, the diameters of the wounds in cherries treated with PTS at 500 and 1000 ppm with FOODCOAT DMC (11 g/L) show a smaller diameter than the control.

### Description of the drawings

In order to complement the description being made and to aid towards better understanding of the invention, a set of drawings is attached to the present specification as an integral part thereof, in which the following is represented with an illustrative and not a limiting nature:
Figure 1 shows the evaluation of infection by *Penicillium expansum* in the *in vivo* treatment with PTS considered in the object of the invention as regards the use of extracts and compounds of plants from the *Allium* genus as preservatives for the food and agrifood industry.
Figure 2 shows the evaluation of infection by *Monilia fructigena* in the *in vivo* treatment with PTS.
Figure 3 shows the evaluation of infection by *Penicillium expansum* in the *in vivo* treatment with the PTS and FOODCOAT DMC combination.
Figure 4 finally corresponds to the evaluation of infection by *Monilia fructigena* in the *in vivo* treatment with PTS combined with FOODCOAT DMC.

### Embodiments of the invention

### Obtaining the extracts

The use of extracts and compounds of plants from the *Allium* genus as preservatives for the food and agrifood industry being advocated is constituted in the following manner:

The extracts may be obtained by any of the methods described in the literature, either with organic solvents (1, 2, 5, 24) or by soaking in water and subsequent extraction with an organic solvent (27).

2 kg of peeled garlic were crushed and mixed in 2 liters of water, leaving said mixture under stirring (from 10 minutes to 24 hours). The liquid is filtered and collected and then extracted first with hexane and then with n-butanol. The extraction solvents are dried over anhydrous sodium sulfate, and the solvents are evaporated. A hexane extract (0.1 to 2% w/w) and an alcohol extract (0.5 to 5% w/w) are thus obtained. However, the extraction may also be fractionated with solvents having an increasing polarity, hexane, *terc*butyl methyl ether, ethyl acetate and finally n-butanol, obtaining extracts the percentages of which could range between 0.08 to 1%, 0.04 to 0.5%, 0.01 to 0.6%, 0.1 to 1.2%, respectively.

The extracts thus obtained can be applied directly by being added then in a food or on its surface with some kind of the aforementioned food carriers, or conveniently encapsulated.

### Obtaining thiosulfinates

These may be obtained by means of fresh extracts of plants from the *Allium* genus (1, 2, 14), or rather by synthesis according to the methods described in the literature (1-4), (6, 24, 25, 27).

Allicin preparation example: 82 g of commercial allyl disulfide is subjected to a vacuum under 0.5 mmHg and at room temperature, until having eliminated the allyl sulfide which contaminates it. 69 g (0.47 mol) of the purified allyl disulfide are dissolved in 700 mL of chloroform, in a flask provided with stirring, and the mixture is cooled until about 0°C, at this point peracetic acid is added (92.5 g, 39%, 0.47 mol), very slowly, and once addition has concluded, it is further stirred for about 30 minutes. Under cold conditions, and maintaining stirring, 140 g of anhydrous sodium carbonate are slowly added, and once the addition thereof has concluded it is further stirred for one hour and then filtered. After evaporating the solvent the acetic acid remains are eliminated by means of evaporation at 0°C at less than 0.5 mmHg. Finally 69.5 g of allicin are obtained of about 95% purity (0.41 mol, yield 87%).

In any case, the thiosulfinate obtained is column-chromatographed on silica gel at 0°C, by means of flash chromatography (30) or conventional chromatography with hexane/*terc*-butyl-methyl ether mixtures of increasing polarities.

The purity of the compounds thus obtained was verified by means of HPLC, ¹H and ¹³C NMR and mass spectrometry (using direct injection).

The minimum purity of the standards was >98% and they were stored at -80°C.

### Obtaining some of the decomposition products of allicin: ajoene and vinyl dithiins.

4.3 g of allicin are dissolved in a mixture of acetone:water 3:2 (v:v) and are refluxed from 15 minutes to 4 hours. The solvent is evaporated and after eliminating the water, the remaining product is 4.3 g of pyrolysis product (C). 3.0 g of C are dissolved in 100 mL of a methanol:water 1:1 (v:v) mixture, and it is extracted with 5x25 ml of hexane, obtaining 0.99 g (D, 32%) after evaporation, and subsequently with 4x25 ml of methylene chloride, obtaining 2.1 g (E, 67%) after evaporation. Subsequent purification by means of liquid chromatography gave the products (E)-(Z)-ajoene, 3-vinyl-4H-1,2-dithiin and 2-vinyl-4H-1,3-dithiin.

Their structures and purity were verified using the methods described for obtaining thiosulfinates.

### Obtaining some of the decomposition products of propyl propylthiosulfinate: propyl propylthiosulfonate (PTSO).

Obtained by means of propyl propylthiosulfinate (PTS) disproportion: 50.0 g (0.30 mol) of PTS are dissolved in 500 mL of water with a pH comprised between 1 and 12, keeping the temperature between 25 and 100°C for a time which may range between 1 minute and 15 days. It is extracted with methylene chloride and the resulting product is purified by means of liquid chromatography over silica gel, obtaining 27 g (0.15 mol, 50% yield) of PTSO.

Its structures and purity were verified using the methods described for obtaining thiosulfinates.

### Preparation of active ingredient and extract encapsulations

Chosen from among the possible encapsulations (28) is the example of the formation of complexes with cyclodextrins, and the process was identical to the one disclosed in the literature (29). The formation of the β-cyclodextrin and PTS complex is described below as an example: 227 g of β-cyclodextrin were dissolved in water at a temperature between 40 and 95°C in which argon is bubbled. 35 g of PTS dissolved in 80 ml of 96% ethanol were slowly added to this solution with stirring. Once the addition was completed the solution was left stirring for 1 hour, maintaining the temperature, and then subsequently cooled at room temperature between 4 and 12 hours. The mixture was then maintained at 0°C for 16 hours. It was filtered and dried in a drier over phosphorus pentoxide, finally giving 238 g of complex with β-cyclodextrin in fine crystalline powder form containing about 10% (w/w) PTS.

### Antimicrobial activity tests

In order to evaluate the antimicrobial activity the agar diffusion technique with cellulose discs of 6 mm in diameter impregnated with the different active ingredient testing doses was used.

The antimicrobial groups tested were chosen with the attempt to encompass the main types responsible for microbial contamination in the food and agrifood industry.

Antibacterial capacity was assessed against suspensions of 10⁶ cells/ml, prepared from pure young cultures of each one of the strains to be tested. The culture medium used was Müller-Hinton medium (Merck).

Antifungal capacity was assessed against suspensions of 10⁸ spores/ml, harvested from pure cultures of the selected molds and against suspensions of 10⁷ cells/ml for the case of yeasts. The culture medium used was the 2% Sabouraud-glucose medium (Merck).

After incubating the culture dishes inoculated with the different organisms at the corresponding temperatures, the microbial inhibition halos that appeared were measured, and said measurement includes the 6 mm diameter of the cellulose discs.

### Stability tests on several commercial food coating preparations

The active ingredients were added to different commercial food coating preparations in different doses and were maintained in a temperature range between 15 and 30°C, monitoring stability by means of HPLC. They all contained, or did not contain, conventional food preservatives such as pimaricin, potassium sorbate, methyl and propyl p-hydroxybenzoates, sodium and calcium propionates, citric acid, acetic acid, etc., for the purpose of checking the stability against the same in the commercial preparation.

Some carrier examples used were:
- Polyvinyl acetate (PVA) and acrylic O/W emulsions.
- Food gum dispersions (xanthan gum, gum arabic, etc.) in water.
- W/O emulsions of fatty acid derivatives: glycerides, sucrose esters, etc.

### Application tests with commercial food coating preparations

These tests were carried out according to the instructions for applying said commercial preparations on foods by immersion, such as spiced sausage, chorizo, cheese, etc. (see application examples), with different antimicrobial product doses.

### Application tests with the antimicrobial products in foods: monitoring of microbiological quality and food preservation

The tests were conducted on meat products such as hamburgers and fresh sausage at different doses, with and without the usual preservatives (sulfites).

Each sample is prepared in quintuplicate and microbiological quality control over time is conducted, a triplicate of each sample being performed.

The microbiological parameters analyzed were as follows:
■ Total mesophilic aerobes
■ Coliforms
■ *Escherichia coli*
■ *Salmonella* (presence/absence in 25 g)
   Said parameters were analyzed at different times:
■ 0 days
■ 4 days
■ 7 days

### METHODOLOGY:

They methodology used in the microbiological quality control over time was used for the following microbiological parameters:
■ Revivable mesophilic aerobe microorganism count.
■ Lactose-positive enterobacteria (coliforms) study and count
■ *Escherichia coli* study and count
■ *Salmonella* study

### TOTAL MESOPHILIC AEROBE COUNT

The method used to determine the number of germs per gram was the dish count number, starting from serial decimal dilutions of the sample and using the surface seeding technique.

The culture medium used was nutrient agar (Merck PCA) prepared on Petri dishes on which, from the serial decimal dilutions of the sample (from -1 ... to -6 in Merck triptone soy broth or TSB), 0.1 mL of each one of the dilutions was transferred.

Dish incubation temperature was 31 ± 1°C.

The final result is expressed as the total microorganism count per gram of sample (said count is performed in the dilutions in which between 30-300 colonies/dish are detected).

### LACTOSE-POSITIVE ENTEROBACTERIA (COLIFORMS) STUDY AND COUNT

The method used to detect lactose-positive enterobacteria (coliforms) is based on its capacity to ferment lactose with the production of acid and gas in the presence of bile salts.

To that end a count was performed in liquid medium to determine a MPN on Brilliant Green Bile Lactose Broth (Merck Brila Broth).

Said Brilliant Broth is prepared in a test tube rack with 3 series of three tubes for each one of the samples to be analyzed. Each tube contains 10 ml of Brila Broth and 1 Durham tube.

1 mL of the dilution of the sample at 1:10 or (-1) is poured into each one of the tubes of the first series.

1 mL of the dilution of the sample at 1:100 or (-2) is poured into each one of the tubes of the second series.

1 mL of the dilution of the sample at 1:1000 or (-3) is poured into each one of the tubes of the third series.

The three series are incubated at 31 ± 1°C, taking a reading at 24 and 48 hours.

The reaction is positive when gas discharge occurs inside the Durham tube, at least in 1/10 of its volume.

The Most Probable Number (MPN) table is used with the number of positive tubes in each series, and the data is extrapolated.

The result is finally expressed as the coliform count per gram of sample.

### ESCHERICHIA COLI STUDY AND COUNT

The positive Brila Broth tubes obtained in the coliform study are used according to the following protocol:

All the tubes having gas production are subcultured again with an inoculation loop in tubes containing 10 mL of Brila Broth (with a Durham tube), being incubated at 44.5°C for 24-48 hours.

Once the incubation has elapsed the existence of *Escherichia coli* is assumed in any tube with growth and with gas formation under the previously discussed conditions.

Eosine Methylene Blue (Merck EMB) was used as a selective confirmation medium, isolating on dishes containing EMB from all the positive tubes. The occurrence of colonies measuring 2-3 mm in diameter (planar or slightly concave), with dark almost black centers occupying 3/4 of the colony which, with reflected light, sometimes show a greenish metallic glow, which are most likely *Escherichia coli,* the confirmation of which is done by means of the indole biochemistry test.

When positive growth (gas) in Brila Broth at 44.5°C, indole production and characteristic growth on EMB agar coincide, the reading is done in the MPN table and the data is extrapolated.

The result is expressed as the number of *Escherichia coli* per gram of sample.

### SALMONELLA STUDY

The systematic testing used consisted of three steps:
a) Pre-enrichment in non-selective liquid medium.
b) Enrichment in selective liquid medium.
c) Differential isolation on selective solid means.

### a) Non-selective pre-enrichment

The medium of choice is buffered peptone water.

25 g of the product to be analyzed are aseptically weighed and diluted in 225 mL of buffered peptone water to obtain a 1:10 dilution. It is mixed well and taken to be incubated at 37°C for 16-20 hours.

### b) Enrichment in selective liquid medium

The pre-enrichment culture is stirred and 10 mL thereof are taken with a sterile pipette, seeding it onto 100 mL of selenite-cysteine broth (Merck), incubating it at 37°C for 18-24 hours.

### c) Differential isolation on selective solid mediums

From the culture obtained in the selective liquid medium, selenite-cysteine broth, seeding is performed on the second dish, in duplicate and without overloading the loop, on xylose lysine deoxycholate (XLD, Merck) agar, Rambach agar (Merck), and SS agar (Merck).

All the seeded dishes are incubated in an oven at 37°C for 24-48 hours.

The test is positive when typical colonies are detected in at least two of the four mediums, which are confirmed with supplementary biochemical tests.

### Effectiveness tests on the antimicrobial products as fungal disease biocontrol agents in cherries

### Materials:

Strains used: isolated from cherry.
PDA medium for isolation and culture of pathogenic cherry fungi *(Penicillium expansum* and *Monilia fructigena).*
Water with 0.5% Tween
Sterile water
Antifungal product dissolved in sterile water at 500 and 1000 ppm, with and without FOODCOAT DMC coating preparation based on fatty acid derivatives (25%) at a dose of 11 g/L.

### Pathogens:

Two pathogenic cherry fungi, *Penicillium expansum* and *Monilia fructigena,* were obtained from fruit during post-harvest preservation. The harvest of the fungal spores, used for inoculating the fruits, was done by flooding the one-week old culture dish with water with 0.5% Tween in order to resuspend the *Penicillium expansum* spores, or with water in order to resuspend the *Monilia fructigena* spores. The suspensions are subsequently filtered through sterile gauzes. The spore count was done with a Thoma count chamber so as to subsequently adjust the concentrations to 16603 spores/µL for *Penicillium expansum* and 500 spores/µL for *Monilia fructigena.* Five successive 1:10 solutions of each concentration were made from these stock solutions.

### Preparation of the fruit and inoculation

After washing and drying of the cherries, a 2 mm surface incision was made with a sowing needle on the side opposite to the fruit suturing scar. 3 µL of the pathogenic fungal spore suspensions were inoculated in the incisions made. The fruits are preserved for 24 hours in chambers at 0°C for the curing of the incision area. They are subsequently submerged for 30 seconds in the biological control agent suspensions to be tested. The fruits are finally stored in chambers at 20°C and the number of developed colonies and the size of the infections caused by them are accounted for every day.

### Effectiveness tests on the antimicrobial products object of the invention as disinfecting agents: environmental disinfection

The methodology followed for the study of the evolution of the microbiota according to treatments consisted of performing environmental sampling before and after treatment.

The environmental sampling carried out for determining the effectiveness of the treatments was conducted by means of a standardized air sampler, AIRTEST-OMEGA (of LCB). The volume of aspirated air was 80 liters in 1 minute in all the sampling conducted.

The culture mediums, on Petri dishes 55 mm in diameter, used for collecting the sampled air were: PCA and Rose Bengal agar of Merck. PCA is a culture medium normally used for the total mesophilic aerobe count, allowing it to incubate between 24 and 72 hours at 30°C. Rose Bengal agar is a fungus-selective culture medium modified to prevent, or at least palliate, the invasive effect of some fungi (such as the *Mucor* and *Rhizopus* genera), after sampling they are taken to incubate for one week at 25°C, with readings at 3, 5 and 7 days, according to the type of fungus growing.

Spraying was carried out by means of a NEBULO EUROPA (Copyr, S.P.A.) sprayer with a 4-liter tank, being able to spray between 15 and 250 mL/min (depending on product viscosity). Preparation of the product to be sprayed is carried out starting from 1 liter of solution at 10000 ppm of PTS, which is diluted with 9 liters of water, resulting in a final solution of 1000 ppm of PTS. The application dose was: 5 L of solution (of 1000 ppm of PTS) for every 1000 m³ of room to be treated.

### EXAMPLES OF THE INVENTION

### 1. Preservative activity on surface of cheese:

Incorporating the compounds or extracts into the food coatings with a PVA emulsion base for cheese:

### 1.-A) Incorporating PTS directly on the emulsion:

The amounts of PTS and pimaricin with potassium sorbate (12000 ppm) as shown in the corresponding table are added to emulsions of 1 kg of PVA. Said preparations are diluted 1:1 with water and pieces of fresh cheese without surface treatment are submerged therein. Once the pieces are dry, each one is introduced into a sealed recipient and is left at room temperature. They are monitored, and the occurrence of mold on their surface is observed on the days herein set forth:

| **SAMPLE** | **ppm PTS** | **ppm PIMARICIN*** | **Visible occurrence of mold at:** |
|---|---|---|---|
| 1 | -- | 2000 | 10-15 days |
| 2 | 5000 | -- | 25-31 days |
| 3 | 10000 | -- | =31 days |

| | | | |
|---|---|---|---|
| * with 12000 ppm of potassium sorbate | | | |

The amounts of PTS added to the PVA emulsions do not alter the physicochemical or film-forming properties of the resulting film once the emulsion is dry.

### 1.-B) Incorporating PTS forming part of a complex with 10% α-cyclodextrin and β-cyclodextrin (w/w)

Amounts of complex in α-cyclodextrin (sample 2) and β-cyclodextrin (sample 3) are added to emulsions of 1 kg of PVA such that the amount of active ingredient, PTS, is 5000 ppm. On the other hand a sample (no. 1) is prepared with pimaricin (2000 ppm) and potassium sorbate (12000 ppm). The same process is followed as in the previous case upon applying the products and the samples are monitored, the occurrence of mold on the surface of the cheese being observed according to the following table:

| **SAMPLE** | **ppm PTS in complex** | **ppm PIMARICIN*** | **Visible occurrence of mold at:** |
|---|---|---|---|
| 1 | -- | 2000 | 10-16 days |
| 2 | 5000 | -- | 28-31 days |
| 3 | 5000 | -- | 28-31 days |

| | | | |
|---|---|---|---|
| * with 12000 ppm of potassium sorbate | | | |

The amounts of the PTS complexes with cyclodextrins do not alter the physicochemical or film-forming properties of the resulting film once the emulsion is dry.

As can be seen, the activity of pimaricin is similar. In contrast, the preservation time of the cheese was equal or slightly greater for the complexes with PTS cyclodextrins than when PTS is added alone.

### 2.- Preserving activity on the surface of sausages, large intestine chorizo and spiced sausage: Incorporating the compounds or extracts in the food coating with a sucrose ester base or diluted in water.

Preparing sample 1: First a series of pig large intestines are submerged in a dispersion of pimaricin in water, 500 ppm, for three hours. Then two pieces are stuffed with 600 g each.

Then 4 other pieces are stuffed with 600 g each and are treated as follows:
- Control sample: two pieces are left untreated.
- Sample 2: Two pieces are submerged for 2 minutes in a dispersion of sucrose esters in water (10-40 g/kg of water), with a concentration of 3000 ppm of PTS.

All the pieces are subjected to drying between 24 and 26°C and 90% relative humidity for 72 hours. Then they are hung and left to cure. The external appearance is monitored and the following results are obtained:

| **Sample** | **Preservative** | **Visible occurrence of mold at:** |
|---|---|---|
| **Control** | None | 4-6 days |
| **1** | Pimaricin* | 6 days |
| **2** | PTS** | 13 days |

| | | |
|---|---|---|
| *Pimaricin: intestines submerged in a pimaricin solution at 500 ppm for 3 hours before stuffing. ** Once stuffed, intestines submerged for 2 minutes in a sucrose ester dispersion with PTS at 3000 ppm. | | |

### 3. Preserving activity of allicin in foods: hamburgers and fresh sausage.

Two different raw meat products (sausages and hamburgers) treated with different allicin doses are prepared.
- The used testing doses were: 25, 50 and 100 ppm.

Five samples of each product (hamburger and sausage) are prepared, each one of them being analyzed in triplicate.
- The microbiological parameters analyzed were as follows:
   o Total mesophilic aerobes
   o Coliforms
   o Escherichia coli
   o Salmonella (presence/absence in 25 g)

   - Said parameters were analyzed at different times:

   o 0 days
   o 4 days
   o 7 days

   - The sample references resulted as follows:
      - Control hamburger: C-H
      - Hamburger treated with 25 ppm of allicin: Batch 1/H-1
      - Hamburger treated with 50 ppm of allicin: Batch 2/H-2
      - Hamburger treated with 100 ppm of allicin: Batch 3/H-3
      - Control sausage: C-S
      - Sausage treated with 25 ppm of allicin: Batch 1/S-1
      - Sausage treated with 50 ppm of allicin: Batch 2/S-2
      - Sausage treated with 100 ppm of allicin: Batch 3/S-3

The results obtained in the specified tests are shown in the enclosed tables.

Tables 12 and 13 show the results obtained after the initial hamburger and sausage preparation microbiological analysis, respectively, with their different treatment doses (i.e. at t=0 days).

Tables 14 and 15 show the data on the results obtained in the microbiological analysis performed 4 days after preparation and treatment of said hamburger and sausage samples, respectively.

| **Table 12** t=0 days | Total aerobes cfu/g | Coliforms cfu/g | *Escherichia coli* cfu/g | *Salmonella* (in 25 g) |
|---|---|---|---|---|
| Control C-H | 3.43 x 10⁶ | 150 | 23 | presence |
| Batch 1 H-1 | 2.17 x 10⁶ | 150 | 23 | presence |
| Batch 2 H-2 | 9.01 x 10⁵ | 150 | 23 | presence |
| Batch 3 H-3 | 4.08 x 10⁵ | 150 | 23 | presence |

| **Table 13** t=0 days | Total aerobes cfu/g | Coliforms cfu/g | *Escherichia coli* cfu/g | *Salmonella* (in 25 g) |
|---|---|---|---|---|
| Control C-S | 3.55 x 10⁵ | 4 | 3 | absence |
| Batch 1 S-1 | 2.24 x 10⁵ | 3 | < 3 | absence |
| Batch 2 S-2 | 8.99 x 10⁴ | < 3 | < 3 | absence |
| Batch 3 S-3 | 6.06 x 10⁴ | < 3 | < 3 | absence |

| **Table 14** t=4 days | Total aerobes cfu/g | Coliforms cfu/g | *Escherichia coli* cfu/g | *Salmonella* (in 25 g) |
|---|---|---|---|---|
| Control C-H | 2.73 x 10⁸ | > 2400 | 1100 | presence |
| Batch 1 H-1 | 1.56 x 10⁸ | > 2400 | 150 | presence |
| Batch 2 H-2 | 6.23 x 10⁷ | 1100 | 150 | presence |
| Batch 3 H-3 | 3.17 x 10⁷ | 150 | 43 | presence |

| **Table 15** t=4 days | Total aerobes cfu/g | Coliforms cfu/g | *Escherichia coli* cfu/g | *Salmonella* (in 25 g) |
|---|---|---|---|---|
| Control C-S | 3.27 x 10⁶ | 240 | 11 | presence |
| Batch 1 S-1 | 3.08 x 10⁶ | 21 | 4 | presence |
| Batch 2 S-2 | 2.72 x 10⁶ | 7 | 4 | presence |
| Batch 3 S-3 | 3.10 x 10⁵ | < 3 | < 3 | presence |

The initial microbiological quality detected in the hamburgers in so far as all the microbiological parameters analyzed was more unfavorable than it was for the sausages, the presence of *Salmonella* being detected even at time 0.

With regard to the effectiveness on the various groups of microbes analyzed, it can be deduced that the three doses used reduce to a greater or lesser degree the counts obtained for said groups.

For the case of total mesophilic aerobes and for the dose of 100 ppm, a reduction of one logarithmic unit is obtained for all the sausage samples and for the case of the hamburgers with respect to their untreated controls. Said reduction is maintained over time (see the evolution over time from 0 to 4 days). The dose of 50 ppm also has a certain degree of effectiveness, the reduction achieved by the dose of 25 ppm of the active ingredient being less significant.

In relation to the reduction achieved for the coliform group, it is also virtually significant for the three doses tested. Said reduction for the case of hamburgers is not shown initially, but it subsequently becomes evident at 4 days. For the case of the sausages, differences which also become more obvious over the course of time are detected from the start.

The reduction caused by the tested product on coliforms is again specifically corroborated with *Escherichia coli.*

On the other hand and in relation to *Salmonella,* it was not initially detected for the case of the sausage but it was detected in the hamburger. The doses of 50 and 100 ppm are able to inhibit *Salmonella* growth.

### 4.- Example of effectiveness of PTS as a disinfecting agent: Environmental disinfection of a cheese maturation chamber and of a cheese manufacture room.

Two rooms are chosen in a cheese factory, a manufacturing room and a cheese maturation room, both rooms measuring 250 m³. In each room, the following process is followed (see "Embodiments of the Invention"):
1. An environmental sample is taken with the sampler prior to treatment, moving during the sampling time (1 minute).
2. The preparation is sprayed (5 L of a solution of 1000 ppm of PTS for every 1000 m³ of room).
3. Twenty-five minutes after the spraying has ended, samples are collected in triplicate (for each one of the culture mediums used, PCA and Rose Bengal agar) from each treated room and in the following manner: two samples are taken statically and at opposite locations of the room, and the third sample is taken in movement during the sample collection time (1 minute).
4. Once the samples are taken, the Petri dishes are incubated and the microbes appearing in the dishes are counted. The results are processed with conversion tables and after applying the corresponding correction factor they were extrapolated from cfu/dish to cfu/m³ (see Table 16).

The following premises can be deduced from the analysis of the data set forth in Table 16:
1. In the cheese manufacture room there is initially an environment contaminated with both bacteria and fungi. After performing the environmental disinfection treatment, a 92% reduction of total aerobic bacteria and a 66% reduction of fungi is obtained, making it an environment with low fungal contamination, and therefore environmental quality would be acceptable.
From these results, the great effectiveness of the product in mixed environmental microbial control can be deduced, since both a significant (almost complete) bacterial and fungal (very significant) reduction are achieved.

**Table 16**

| **SAMPLED AREA *** | **MICROBIAL COUNTS** | | | |
|---|---|---|---|---|
| | MESOPHILIC AEROBES | | FUNGI | |
| | cfu/dish | cfu/m³ | cfu/dish | cfu/m³ |
| MATURATION CHAMBER BEFORE TREATING | 4 | 50 | 470 | > 20401 |
| MATURATION CHAMBER After treatment Sampling while moving | 4 | 50 | 202 | 4636 |
| MATURATION CHAMBER After treatment Static sampling | 4 | 63 | 223 | 5843 |
| MATURATION CHAMBER After treatment Static sampling | 6 | 76 | 238 | 7761 |
| MANUFACTURING ROOM BEFORE TREATING | 104 | 1167 | 137 | 2353 |
| MANUFACTURING ROOM After treatment Sampling while moving | 9 | 114 | 46 | 630 |
| MATURATION CHAMBER After treatment Static sampling | 7 | 89 | 44 | 600 |
| MATURATION CHAMBER After treatment Static sampling | 8 | 101 | 50 | 691 |

2. In reference to the cheese maturation chamber, a highly contaminated environment is initially detected with an almost complete predomination of fungi (bacterial contamination levels are not detected).

After carrying out the environmental disinfection treatment, a significant reduction of the level of fungi detected is obtained, in the order of 53%. Said data is very significant given that the fungal contamination levels found in this chamber are very high, and repeated sequential environmental disinfecting treatments are recommended until restoring microbial figures to acceptable levels.

In conclusion, given the data previously set forth the significant effectiveness of the products proposed in this invention for disinfecting treatments of facilities, equipment and the environment, particularly in the food and agrifood industries, is demonstrated given the high level of reduction of the detected microbial figures (in reference to both bacteria and fungi).

## Claims

1. The use of extracts and compounds of plants from the *Allium* genus as preservatives for the food and agrifood industry, of the type intended to be used as antimicrobial preservatives for the food and agrifood industry, in foods intended to be consumed by humans and animals, both in the foods and very particularly on the surface thereof, as well as for the treatment of plants being harvested and for post-harvest treatments of agricultural products such as fruits, garden produce, seeds, etc., and for disinfecting facilities, equipment and the environment, particularly in the food and agrifood industry, using compounds of plants from the *Allium* genus, thiosulfinates in general, thiosulfonates in general, 3-vinyl-4H-1,2-dithiin and 2-vinyl-4H-1,3-dithiin, using an ajoene compound consisting of a mixture of E and Z isomers of each one of them separately as an antimicrobial preservative for the food and agrifood industry in foods intended for being consumed by man and/or animals, both in the foods and very particularly on the surface thereof, as well as in post-harvest treatments of agricultural products such as fruits, garden produce, seeds, etc., and for disinfecting facilities, equipment and the environment, particularly in the food and agrifood industry, as well as the use of the mixtures of the products resulting from the decomposition or transformation of thiosulfinates, as well as the different fractions thereof, as antimicrobial preservatives of foods intended for being consumed by man and animals, both in the foods and very particularly on the surface thereof, as well as for the treatment of plants being harvested and for post-harvest treatments of agricultural products such as fruits, garden produce, seeds, etc., and for disinfecting facilities, equipment and the environment, particularly in the food and agrifood industry, using as starting materials for producing said mixtures of products pure thiosulfinates or mixtures thereof, these thiosulfinates being dissolved in a solvent or mixture of solvents of any type (organic, inorganic and/or water) and under any type of conditions for producing decomposition, either temperature conditions, concentration, pressure, pH conditions, etc., and however long the transformation or decomposition lasts or is maintained, and the use of extracts from plants of the *Allium* genus in post-harvest treatments of agricultural products such as fruits, garden produce, seeds, etc., and for disinfecting facilities, equipment and the environment, particularly in the food and agrifood industry, **characterized in that** it allows their application within the field of coatings of any type, regardless of the fact that they initially have a liquid form, for their application as liquid preparations, such as emulsions, suspensions, dispersions or in solutions, or they may be solid coatings of any class, the purpose of which is to envelope or be in contact with foods, such as for example polyethylene, polypropylene, paper, waxes (natural or not), etc.

2. The use of extracts and compounds of plants from the *Allium* genus as antimicrobial preservatives for the food and agrifood industry according to the fields of application mentioned in the first section of claim 1, **characterized in that** the extracts and/or compounds can be incorporated into any type of encapsulation, and this encapsulation can in turn be incorporated either in the food or on the surface thereof, or else it may be incorporated in a coating according to claim 1.

3. The use of compounds of plants from the *Allium* genus as flavors or flavoring agents in the food and agrifood industry according to the fields of application mentioned in the first section of claim 1, in a food, on the surface thereof, included in coatings or encapsulations according to claim 2.
